**Europäisches Patentamt**

**European Patent Office**

**Office européen des brevets**

(19)

(11) Publication number: **0 110 527**
**A1**

(12) # EUROPEAN PATENT APPLICATION

(21) Application number: **83306132.8**

(22) Date of filing: **11.10.83**

(51) Int. Cl.³: **C 12 G 3/02**

(30) Priority: 22.10.82 GB 8230318
01.12.82 GB 8234279
16.05.83 GB 8313428
21.09.83 GB 8325312

(43) Date of publication of application: **13.06.84**
**Bulletin 84/24**

(84) Designated Contracting States: **AT BE CH DE FR GB IT LI NL SE**

(71) Applicant: **Carson, Thomas Anthony, Red Lodge Highfields, Eye Suffolk (GB)**

(72) Inventor: **Carson, Thomas Anthony, Red Lodge Highfields, Eye Suffolk (GB)**

(74) Representative: **Dummett, Thomas Ian Peter, 7 Hasketon Road, Woodbridge Suffolk IP12 4JT (GB)**

(54) **Method and composition for fermenting sugar solutions.**

(57) The present invention provides a method for preparing an aqueous ethanol solution having a selected flavour which method comprises fermenting an aqueous solution containing one or more fermentable carbohydrates of which more than 90.75% by weight is provided by a substantially pure fermentable sugar to yield an aqueous solution containing ethanol; and before, during or after fermentation incorporating a pre-determined flavouring agent into the solution to produce a beverage for human consumption having the desired flavour. The invention also provides a fermentation aid for use in fermenting carbohydrates and unitary packs for such use.

TITLE: METHOD AND COMPOSITION FOR FERMENTING SUGAR SOLUTIONS.

The present invention relates to a method and composition for fermenting sugar solutions, notably aqueous solutions of substantially pure sucrose, fructose and/or glucose, to yield an ethanol base which can be used in the preparation of alcoholic beverages.

Many beverages are prepared by mixing a spirit drink, eg. gin, whisky, vodka or rum, containing more than about 25% by volume ethanol with an effervescent and/or flavoured soft drink, eg. tonic or soda water, bitter lemon or lemonade. However, the spirit drink is produced by a complex process involving fermentation of a fruit or vegetable, eg a grain, mash, which is then distilled to recover the alcohol from that mash. Also, the spirit drink carries a high excise tax due to its high alcohol content and distillation is forbidden by law except in closely controlled circumstances. As a result, the spirit drink is expensive and cannot be made by the amateur brewer at home.

I have now devised a method by which beverages similar to such spirit based beverages can be produced without the distillation of the spirit and by which it is possible to produce a range of flavoured beverages from a single type of alcoholic base produced by direct fermentation in the home.

Accordingly, the present invention provides a method for preparing an aqueous ethanol solution having a selected flavour which method comprises fermenting an aqueous solution containing one or more fermentable carbohydrates of which more than 90.75% by weight is provided by a substantially pure fermentable sugar to yield an aqueous solution containing ethanol; and before, during or after fermentation incorporating a pre-determined flavouring agent into the solution to produce a beverage for human consumption having the desired flavour.

It has been proposed in British Patent No 1472980 to produce an alcoholic base containing no more than 6% by volume ethanol and having a bland taste. This base can be mixed with a flavouring agent to produce a cocktail type of beverage. However, the process described in that patent required the essential use of a specific boiled wort base which had been obtained from a specific malt, as well as a fermentable carbohydrate. The fermentable carbohydrate provided a maximum of 90.25% of the total fermentable material and in the Examples provided much less than this. Furthermore, the process as described would not be suitable for operation under domestic conditions and requires the use of ingredients which would not be readily available to the amateur brewer.

However, by fermenting an aqueous solution of a substantially pure sugar in the substantial absence of fruit or vegetable mashes of the type required in BP 1472980, it is possible to obtain a product with reduced colour and flavour using ingredients which are readily available to the amateur brewer or which can be readily incorporated into a fermentation additive to be supplied to him and using simple techniques and equipment, which enables the product to be produced in the home. This product can then be flavoured to give the desired type of beverage, eg. with gin and tonic, whisky and ginger or rum and cola flavouring, rather than the strong flavouring agents used in BP 1472980 to mask the residual flavour and colour inherent in the use of a malt wort and hop extracts. Since the product of the present invention derives its character from the flavourings incorporated thereinto, one type of fermentation can be carried out and a variety of beverages produced merely by the use of different flavourings. Also it is possible to produce beverages using the process of the invention which have an ethanol content in excess the 6% maximum quoted in BP 1472980.

For convenience the term "alcohol base" will be used herein to denote the aqueous product obtained by the fermentation of sugars and which contains ethanol and possibly other alcohols, eg. fusel oils, in varying proportions.

In the method of the invention, an alcohol base is produced directly by the fermentation of a substantially pure fermentable sugar. The invention can be applied to a wide range of types of sugar, notably to mono- and di-aldopentoses and/aldohexoses and their keto- analogues. The sugar for present use can itself have been obtained from a higher carbohydrate, for example by the hydrolysis of a cellulose, a starch or a poly-saccharide; followed by purification of the product, eg. by fractional distillation or crystallisation. Typical of such products is invert sugar which is obtained by the treatment of sucrose with an acid. However, it is preferred to use a naturally occuring mono- or di-saccharide directly in the process of the invention, notably glucose, galactose, fructose, sucrose, maltose or lactose, or mixtures thereof. These can be obtained from a wide variety of sources, eg. from sugar beet or cane. The term "sugar" is therefore used herein to denote the material which is to be fermented in the process of the invention and in a general sense to denote any fermentable mono- or di-saccharide wherever the context permits.

The sugar for present use is substantially pure so as to produce a substantially colourless and flavourless alcohol base which can be flavoured. It is therefore preferred to use sugars which contain less than 5% by weight of impurities, notably of proteinaceous materials. Whilst some of the sugar used in the method of the invention can be provided in the form of fruit or vegetable mashes, juices or concentrates, these will introduce undesirable off-flavours and/or colours and should be used to provide less than 9.75%, preferably less than 8%, by weight of the total sugar available to be fermented. It is particularly preferred to use the substantially pure white sugar obtained from the refining of the mixture of sugars in sugar beet or sugar cane. Such sugar is commercially available in crystalline form and is known in the UK as white granulated sugar. Where weights and volumes of the sugar for present use are given, these are to include any water of crystallisation present therein. Where a sugar is used in a syrup carrier for any of the ingredients in the mixture to be fermented, this sugar is preferably the same as the sugar to be fermented and is included when calculating the amount of sugar being fermented.

In the method of the invention, an aqueous solution of the sugar is fermented to yield an alcohol base. Ferment-ation is carried out using conventional techniques, especially where some of the carbohydrate is derived from a grape, fruit or grain mash. Thus, the sugar is dissolved in a suitable amount of water, typically 0.5 to 3 Kgs of sugar per 4.5 litres of water, which may be warmed to aid dissolution of the sugar. A yeast, preferably one selected from the Sacchromyces or Candida strains, for example Sacchromyces cerivisae, Sacchromyces oviforma or Candida pseudotropicalis, is added to the solution, optionally with a fermentation aid, and the mixture allowed to ferment in the conventional manner, eg. by holding the mixture in a vessel fitted with a vapour lock to permit the escape of carbon dioxide generated during fermentation. Typically, fermentation is carried out at from 40 to 95° F.

However, I have found that with conventional fermentation aids, notably those based on inorganic ammonium salts, fermentation often does not go to completion when substantially pure sugar is used. As a result, the alcohol base produced often contains unfermented sugar and only a low alcohol content, typically less than 3% by volume. This may be acceptable for some types of beverage, eg. for a sweet vermouth or Campari type of beverage. However, for many beverages it is necessary to obtain an alcohol base which has a lower unfermented sugar content and a higher alcohol content.

I have found that the problems with the conventional nutrient formulations are caused by the lack of proteins and vitamins which are essential for the yeast in the mixture to be active. Conventional fruit and vegetable mashes usually contain more than sufficient vitamin and protein to enable the yeast to remain active and to enable fermentation to take place to the desired extent. With the method of the invention, these are not present in the sugar and require to be added in order for the yeast to ferment out the sugar to an adequate extent and thus achieve an alcohol content greater than 3% by volume, eg. 12-18%.

Accordingly, the present invention also provides a method for fermenting carbohydrates to produce an alcohol base, preferably one containing more than 3% by volume of alcohol, <u>characterised in that</u> there is incorporated into the mixture being fermented a fermentation aid which contains one or more vitamins at least one of which is selected from the B complex and one or more proteinaceous amino acids or derivatives thereof.

A fruit and/or vegetable juice or extract, eg a grape or apple juice or a malt extract, may be used to provide part or all of the required vitamins and amino acids. However, such juices or extracts are of variable composition and also contain other undesirable materials, eg. other proteins, which impart off-flavours and/or colour to the alcohol base produced. It is therefore preferred to use the vitamins and amino acids in substantially pure form and to prepare a vitamin/amino acid cocktail from the individual ingredients.

Preferably, the vitamins for present use include $B_6$ and

may include vitamins from other groups. Especially preferred vitamins for present use are selected from the group consisting of p-amino benzoic acid, biotin, folic acid inositol, nicotinic acid, pantothenic acid, pyridoxine, riboflavin and thiamine. It is preferred to use a mixture of two or more B vitamins in the fermenting mixture. The optimum selection of vitamins will depend upon the yeast used to ferment the carbohydrate and can readily be determined by simple trial and error tests. Typically, each of the B vitamins will be used in an amount of from 0.02 to 1000, preferably 1 to 100, millegrams per litre of the mixture being fermented, and the total mixture of vitamins is used in amount of from 0.1 to 5000, preferably 10 to 500, millegrams per litre.

Preferred proteinaceous amino acids are selected from the group consisting of alanine, arginine, aspartic acid, asparagine, cysteine, glutamic acid, glutamine, glycine, histidine, isoleucine, leucine, lysine, methionine, phenylalanine, proline, serine, threonine, tryptophane, tyrosine and valine. It will usually be desired to use a mixture containing 2, 3 or more of the amino acids in the mixture being fermented. The optimum mixture of amino acids selected will depend upon the yeast being used to ferment the carbohydrates and can be readily determined by simple trial and error tests. If desired, the amino acids can be used in the form of a salt thereof, notably as the hydrochloride or the calcium salt. Typically, the amino acids will each be used in an amount of from 0.5 to 250, preferably 1 to 100, millegrams per litre of the mixture being fermented, and the total mixture of amino acids is used in an amount of from 1 to 10000, preferably 5 to 500, millegrams per litre.

It will be appreciated that the above vitamins and amino acids will be consumed as the fermentation proceeds and that the above figures represent the overall requirements for fermentation.

The fermentation aid mixture for use in the present invention may also contain other ingredients: eg. inorganic sources of nitrogen and/or phosphorus and/or potassium, for example ammonium sulphate and/or phosphate; potassium phosphates; calcium and/or magnesium salts, eg. the carbonates or sulphates; and trace metal salts, eg. salts of sodium, boron, copper, manganese or zinc, eg sodium chloride. These other materials may be used in the conventional amounts for fermentation, eg. the nitrogen sources will typically supply from 0.1 to 10 gms of N per litre of the mixture being fermented. If desired, flavouring enhancement agents, eg. citric acid, can also be present or can be added after fermentation is carried out.

0110527

The fermentation aid can be added to the mixture to be fermented initially, eg. admixed with the yeast required for fermentation, or can be added in part or wholly at some point during fermentation. Typically, the fermentation aid will be put up as an aqueous solution or suspension, option -ally in a sugar base, which is added to the mixture to be fermented at the outset. However, the fermentation aid can also be put up wholly or in part as a dry powder mix.

As indicated above, the fermentation is carried out in essentially the conventional manner. If desired, the temperature of the fermenting mixture can be maintained at from 65 to 85° F in order to aid rapid fermentation of the carbohydrates. It is preferred to maintain the pH of the fermenting mixture within the range 3.0 to 8, preferably 3.5 to 6. If desired, one or more buffering agents, eg. potassium phosphate, may be present where these are not already present in the fermentation aid mixture. A particularly preferred buffering agent is calcium and/or magnesium carbonate.

Fermentation is carried out until the carbohydrates in the fermenting mixture have been fermented out substantially completely or until the specific gravity of the mixture has fallen to the desired value. Typically, the mixture will have an initial specific gravity in the range 1.130 to 1.050 and it will be desired to cease fermentation when it reaches a value of between 0.995 and 0.985. Where fermentation does not cease of its own accord within the desired range, it can be stopped using any suitable means, eg. by addition of sodium metabisulphite to the fermenting mixture.

As indicated above, the product of the fermentation is an alcohol base, typically containing from 10 to 15% by volume ethanol, although higher or lower alcohol levels can be achieved by suitable selection of the amount of fermentable carbohydrate in the mixture to be fermented and/or by stopping fermentation before the end point has been reached. The alcohol base can be filtered to remove solids and yeast and treated with fining agents in the conventional manner to produce a substantially clear solution. If desired, the solution can be filtered through, or otherwise treated with, active charcoal or other suitable material to improve the colour and taste thereof.

The desired flavours are incorporated into the alcohol base by any suitable means. Thus, the flavour of the spirit or other fortified drink and the soft drink which it is desired to simulate can be added as a fluid concentrate to the alcohol base after fermentation. Alternatively, part or all of the flavour can be added before fermentation commences or during fermentation. Typically, the flavouring will be put up as a fluid concentrate in a sugar, notably sucrose, syrup carrier. The flavours can be selected from a wide range: eg. to simulate Campari and tonic or soda; vermouth and tonic or lemon; gin and tonic or bitter lemon; whisky and ginger or soda; vodka and tonic or cola; rum and lemon or cola; or brandy and soda or ginger. Where a low calorie drink is required, some or all of the sugars in the flavouring can be replaced by saccharin and/or other synthetic sweteenining agents. Since the same alcohol base can be use in the preparation of any desired beverage merely by mixing with the appropriate flavours, the method of the invention provides a simple means for the amateur brewer to make a wide range of spirit drink type beverages at home.

The alcohol base incorporating the flavours can be rendered effervescent by any suitable means. Thus, it can be diluted with the appropriate effervescent soft drink immediately prior to consumption, eg. a gin and tonic type base can be diluted with, say, about an equal volume of tonic water to yield an effervescent gin and tonic style beverage which can contain from 5 to 8% by volume ethanol or more. Alternatively, if it is desired to drink the base at its full strength, it can be made effervescent by carbonating it in a carbonating machine, eg. of the Sodastream type. Where the brewer can wait before consuming the base, it can be subjected to a secondary fermentation process in a stoppered bottle using conventional techniques.

The necessary materials for preparing the alcohol base and flavouring can be readily put up in a kit for sale to the amateur brewer for use in the home. Where such kits are to be used to prepare the spirit type beverages, they are distinguished from conventional wine and other homebrew kits by the fact that where a natural fruit, vegetable and/or grain mash, juice or concentrate is present, this is intended to provide only a minor proportion, typically less than 90.25% by weight, of the total fermentable carbohydrate to be fermented, and substantially none of the flavour in the fermented product.

The invention therefore also provides a container containing containing a flavouring concentrate, optionally in a sugar syrup, in association with a container containing a fermentation aid comprising: from 0.001 to 5 parts by weight of one or more substantially pure vitamins, at least one of which is selected from the B complex; from 0.001 to 5 parts by weight of one or more substantially pure amino acids, selected from the essential protein amino acids; and optionally from 0.1 to 10 parts of a source of inorganic nitrogen, potassium and/or phosphorus compatible with a fermentation yeast. The amino acids can be present in the form of a derivative thereof; and the materials can be put up in solution or suspension in a sugar syrup if desired. It is preferred to pack the fermentation aid in a substantially sterile closed container, eg. a glass or plastics bottle or a metal foil or similar sachet. Typically, such a container will have a capacity of from 50 to 3000 mls, where the fermentation aid is put up in solution or suspension form. Preferably, the kit will also contain from 2 to 30 parts of a fermentation yeast, notably put up in a separate container.

The fermentation aid can be prepared by dry mixing the ingredients using conventional techniques. However, with a fluid formulation, it is preferred to sterilise or pasteurise the composition, eg. by heating it, typically to 80°C, or by ading a preservative, for example sodium metabisulphate.

Preferably the containers are put up in a cardboard or similar container together with from 2 to 30 parts of a yeast, preferably a dried yeast, as a unitary pack. Typically, such a unitary pack will contain the following ingredients:

a). from 25 to 250 gms of a fermentation aid comprising a mixture of substantially pure essential protein amino acids and substantially pure vitamins at least one of which is selected from the B complex, optionally with one or more sources of inorganic nitrogen    and/or    potassium    and/or    phosphorus physiologically compatible with a fermentation yeast;

b).  from 2 to 30 gms of a fermentation yeast;

c).    optionally    up    to    5000    gms    of    fermentable carbohydrate, which is preferably substantially pure sugar, optionally containing one or more sythetic sweetening agents, eg. saccharin;

d).  optionally one or more flavouring agents provided other than by the fermentable carbohydrate; and

e).  optionally up to 2000 mls of water as a carrier for one or more of the other ingredients.

The invention will now be illustrated by the following Examples in which all parts and percentags are given by weight unless stated otherwise:

Example 1:

A fermentation aid mixture is prepared by dry mixing together the essential protein amino acids (7.498 parts) and vitamins $B_1$, $B_6$, H, pantothenic acid, meso-inositol and nicotinic acid (2.36 parts). The amino acids and vitamins are food grade materials and substantially pure. To this mixture are added: 0.1 parts of a proprietary trace element mixture containing sodium, copper, zinc, iron and manganese sulphates or chlorides; 2 parts each of ammonium sulphate and ammonium phosphate; 4.5 parts each of potassium phosphate and magnesium sulphate; 0.5 parts each of potassium and calcium chlorides. This dry mix can be packed in a foil sachet or dispersed into 100 parts by volume of de-mineralised water and pasteurised for packing into a kit for use by the amateur home brewer.

The above fermentation aid is mixed into 4400 parts by volume of water at ambient temperature containing 3 parts of Sacchromyces cerivisae yeast and 1000 parts of substantially pure sucrose. The resultant mixture has an initial specific gravity (sg) of 1.090 and was allowed to ferment out at 80°F under an fermentation lock for four days. At the end of this time the sg. has fallen to 0.995.

The supernatant liquor is decanted off from the yeast and other solid residues and allowed to stand for twenty days to give a substantially clear water-like alcohol base. This has a neutral bland taste and contains approximately 12% by volume of ethanol.

From the alcohol base a sample (aproximately 100 parts by volume) is taken and put in a drinking glass to which a sucrose syrup containing citric acid and gin and tonic flavours commercially available from Bush Boake Allen Limited is added to give the desired gin and tonic flavour. This mixture is then diluted with tonic water to give an effervescent drink containing approximately 5 to 8% by volume alcohol.

Another sample of the alcohol base is flavoured with the gin and tonic flavouring and carbonated in a Sodastream carbonation machine. The sample is held in the machine for at least 1 minute after injection of the $CO_2$ to reduce frothing of the carbonated drink when it is removed from the machine. The result is an effervescent gin and tonic style drink containing 12 to 15% by volume ethanol.

A third sample (approximately 1000 parts by volume) is placed in a stoppered bottle and allowed to undergo secondary fermentation for three weeks to produce an effervescent alcohol base which can be flavoured with the gin and tonic flavour to five an effervescent gin and tonic style drink containing 12 to 15% by volume alcohol.

Comparative Example.

When the process of Example 1 is repeated but using a conventional grape concentrate to provide more than 10% of the fermentable carbohydrate, the alcohol base produced has a marked colour and flavour and is totally unsuitable as a base for preparing mixer drinks.

Example 2:

The process of Example 1 can be repeated except that a commercially available ginger flavour is added to the mixture to be fermented so as to yield a ginger flavoured alcohol base. This can then be flavoured with a whisky or vodka flavour and rendered effervescent by secondary fermentation; by addition of ginger ale or in a carbonation machine as described in Example 1.

Example 3:

The process of Example 1 is repeated using a vitamin mix which also includes pantothenic acid, inositol, biotin and p-amino benzoic acid, and an amino acid mix which includes histidine, methionine and tryptophane. The fermentation aid mixture contains the vitamins, amino acids, trace elements and inorganic nutrient salts in weight proportions of substantially 8:1:4:800. The alcohol base obtained using such a fermentation aid to ferment substantially pure sucrose has a colour and flavour similar to the alcohol base of Example 1 and can be used in the same manner to make flavoured alcoholic beverages.

CLAIMS:

1). A method for preparing an aqueous ethanol solution having a selected flavour <u>characterised in that</u> it comprises fermenting an aqueous solution containing one or more fermentable carbohydrates of which more than 90.75% by weight is provided by a substantially pure fermentable sugar to yield an aqueous solution containing ethanol; and incorporating a pre-determined flavouring agent into the solution to produce a beverage for human consumption having the desired flavour.

2). A method as claimed in claim 1 <u>characterised in that</u> the fermentable carbohydrate contains less than 5% by weight proteinaceous material.

3). A method as claimed in claim 1 <u>characterised in that</u> the fermentable carbohydrate is provided by substantially pure sucrose, glucose and/or fructose.

4). A method as claimed in any one of the preceding claims <u>characterised in that</u> fermentation is carried in the presence of a fermentation aid comprising one or more vitamins at least one of which is selected from the B complex and one or more proteinaceous amino acids or derivatives thereof, the vitamins and amino acids preferably being substantially pure.

5). A method as claimed in any one of the preceding claims characterised in that an aqueous solution comprising as substantially the sole fermentable carbohydrate substantially pure sucrose, fructose and/or glucose is fermented in the presence of a fermentation aid comprising comprising one or more substantially pure vitamins at least one of which is selected from the B complex and one or more substantially pure proteinaceous amino acids or derivatives thereof to give an aqueous product containing at least 6% by volume of ethanol; flavouring this product with a selected flavouring additive; and rendering the product effervescent.

6). A method for fermenting an aqueous solution of a fermentable carbohydrate characterised in that an aqueous solution of the carbohydrate is caused to ferment in the presence of a yeast and a fermentation aid comprising comprising one or more substantially pure vitamins at least one of which is selected from the B complex and one or more substantially pure proteinaceous amino acids or derivatives thereof, to give an aqueous product containing more than 6% by volume ethanol.

7). A method as claimed in claim 6 characterised in that a selected flavouring agent is incorporated into the product and the product is rendered effervescent.

8). A method as claimed in claim 6 characterised in that the aqueous solution of the fermentable carbohydrate is substantially free from fruit or vegetable mashes or juices.

9). A composition of matter for use in a method as claimed in any one of the preceding claims <u>characterised in that</u> it comprises a container containing containing a flavouring concentrate, optionally in a sugar syrup, in association with a container containing a fermentation aid comprising: from 0.001 to 5 parts by weight of one or more substantially pure vitamins, at least one of which is selected from the B complex; from 0.001 to 5 parts by weight of one or more substantially pure amino acids, selected from the essential protein amino acids; and optionally from 0.1 to 10 parts of a source of inorganic nitrogen, potassium and/or phosphorus compatible with a fermentation yeast.

10). A unitary pack for use in the fermentation of fermentable carbohydrates <u>characterised in that</u> the pack comprises:

a). a container containing from 25 to 250 gms of a fermentation aid comprising a mixture of substantially pure essential protein amino acids or derivatives thereof and substantially pure vitamins at least one of which is selected from the B complex, optionally with one or more sources of inorganic nitrogen and/or potassium and/or phosphorus physiologically compatible with a fermentation yeast;

b). a container containing from 2 to 30 gms of a fermentation yeast;

c). optionally a container containing up to 5000 gms of fermentable carbohydrate;

d). optionally a container containing one or more flavouring agents provided other than by the fermentable carbohydrate; and

e). optionally up to 2000 mls of water as a carrier for one or more of the other ingredients.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 206 719 (R.M. DRAEGER) * Claims 1,2; page 2, column 1, lines 16-68; page 1, column 2, lines 22-34 * | 1-3,7 | C 12 G 3/02 |
| Y | --- | 4-6,9 | |
| Y | FR-A-1 160 033 (HOFFMANN-LA ROCHE & CIE.) * Summary point I, nos. 1-3 * --- | 4-6,9 | |
| X | FR-A- 785 220 (A. LEPELLETIER-BEAUFOND) * Summary * --- | 1,2,7 | |
| X | CHEMICAL ABSTRACTS, vol. 43, 1949, column 7190e, Columbus, Ohio, USA & JP - A - 172 682 (DAI NIPPON BEER SHURYOKAGAKU KENKYUJO) 16-05-1946 * Abstract * --- | 1-10 | TECHNICAL FIELDS SEARCHED (Int. Cl. 3) C 12 G |
| X | US-A-4 178 389 (D.P. PILLA) * Column 3, lines 7-65; claim 1 * | 1-3,7 | |
| Y | --- | 4-6,9 | |
| X | GB-A-2 087 426 (SOCIETE GENERALE DES EAUX MINERALES DE VITTEL) * Claims 1,6-8; page 1, lines 36-43; page 1, lines 72-79; examples * --- -/- | 1-8 | |

The present search report has been drawn up for all claims

| Place of search THE HAGUE | Date of completion of the search 03-02-1984 | Examiner COUCKE A.O.M. |
|---|---|---|

## EUROPEAN SEARCH REPORT

European Patent
Office

| | DOCUMENTS CONSIDERED TO BE RELEVANT | | Page  2 |

| Category | Citation of document with indication, where appropriate, of relevant passages | Relevant to claim | CLASSIFICATION OF THE APPLICATION (Int. Cl. ³) |
|---|---|---|---|
| X | GB-A-2 085 469  (H.E. JOHNSON)<br>* Claims; page 2, lines 1-47 *<br>--- | 1-7 | |
| Y | US-A-2 694 641  (H.G. ATWOOD et al.)<br>* Claims 1-5; column 4, line 72 - column 7, line 39 *<br>---<br><br>----- | 1-10 | |
| | | | **TECHNICAL FIELDS SEARCHED (Int. Cl. ³)** |

The present search report has been drawn up for all claims

| Place of search | Date of completion of the search | Examiner |
|---|---|---|
| THE HAGUE | 03-02-1984 | COUCKE A.O.M. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
 
& : member of the same patent family, corresponding
  document

EPO Form 1503 03.82